# EUROPEAN PATENT APPLICATION

(11) **EP 3 486 210 A1**
(43) Date of publication of application: **22.05.2019**
(21) Application number: 17202640.3
(22) Date of filing: 20.11.2017
(51) Int. Cl.: B67D 7/34, B67D 1/00, B67D 7/02, B67D 1/08

(54) **VESSEL EXTRACTION APPARATUS AND VESSEL THEREFORE**

(71) Applicant: RIPRUP Company S.A., St. Peter Port GY1 WQ (GG)
(72) Inventor: BRAUN, Benjamin, 75334 Straubenhardt (DE); BISSEN, Monique, 75181 Pforzheim (DE); SCHUCKER, Josef, 6622 Ronco Sopra Ascona (CH)
(74) Representative: Wittmann, Günther

(57) **Abstract**

The present invention discloses a vessel, comprising:
- an essentially cylindrical vessel body having an opening, a cylindrical wall and a cylinder base;
- a first groove formed in the cylindrical wall and extending in axial direction at least a predetermined portion of the vessel body; and
- a second groove formed in the cylindrical wall and extending in axial direction at least a predetermined portion of the vessel body;
- wherein the first groove is an orientation groove defining the orientation of the vessel with respect to a guide of a fluid extraction apparatus; and
- wherein the second groove is a coding groove identifying the type of vessel; and
a vessel extraction apparatus, adapted to extract fluid form a plurality of vessels, comprising:
- a plurality of receiving openings, wherein each opening is adapted to receive one of the vessels according to any one of claims 1 to 3;
- wherein a first protrusion and a second protrusion are associated to each receiving opening;
- wherein the first protrusion is adapted to engage with a first groove of a vessel;
- wherein the second protrusion is adapted to engage with a second groove of a vessel that is of a vessel type corresponding to the respective receiving opening;
wherein the distance from the first protrusion to the second protrusion of a first receiving opening differs from the distance from the first protrusion to the second protrusion of a second receiving opening.

## Description

The present invention relates to a vessel a vessel extraction apparatus for use in a beverage dispenser for extracting a fluid from the vessel. The vessel may comprise a flavoring fluid and/or minerals for beverages such as water.

### Prior art

Prior art systems deliver minerals from a plurality of tanks into a beverage.

WO 2016/090235 A1 discloses an apparatus for a portable hydration system including a mechanical or a electromechanical mechanism for dispensing additives into a liquid. Such mechanism is not well suited for water dispensers.

DE 20 2010 006 679 U1 discloses an apparatus for producing mineral water comprising at least one mineral container located between a filter and a water outlet. A pump supplies the minerals from the tank into the filtered water.

US 2011/0159150 A1 discloses a method for producing mineral water by use of a mineral substance container including a pump.

EP 2 565 165 B1 discloses an apparatus and method for producing remineralized water.

WO 2007/001488 A1 discloses a cartridge for an additive dispensing system for dispensing a consumable additive to water.

WO 2007/088523 A2 discloses a fluid container having an additive dispensing system for dispensing a consumable additive to water.

WO 2008/129260 A1 discloses a water treatment cartridge, wherein the water to be treated passes the cartridge and wherein the cartridge comprises means for automatically releasing an additive into the water in the cartridge.

High efforts are required for producing the cartridges of the prior art. Further, prior art cartridges comprise undesired materials, such as plastic. Since the prior art cartridges comprise plastic and are formed by many different parts, they cannot fulfill high hygienic standards

Consequently there is a need for a vessel for mineralization fluids and/or flavoring fluids and an extraction apparatus for such vessels that can fulfill high hygienic standards for beverage dispensers.

### Summary of the invention

The object of the present invention is achieved by a vessel according to claim 1, a set of vessels according to claim 4, a vessel extraction apparatus according to claim 5, a water dispenser according to claim 16 and a use according to claim 18. The depending claims relate to preferred embodiments.

A vessel according to the present invention comprises an essentially cylindrical vessel body having an opening, a cylindrical wall and a cylindrical base. A first groove is formed in the cylindrical wall and extends in axial direction at least a predetermined portion of the vessel body from the vessel neck. A second groove is formed in the cylindrical wall and extends in axial direction at least a predetermined portion of the vessel body from the vessel neck. The first groove is an orientation groove defining the orientation of the vessel with respect to a guide of a fluid extraction apparatus. The second groove is a coding groove identifying the type of vessel. The vessel may be a small container, a small bottle or the like.

The distance, such as the angular distance, between the first groove and the second groove may determine the type of vessel. The vessel may be filled with a flavoring fluid, mineralization fluid, food additives, nutrition additives, or the like for a beverage. The distance between the first groove and the second groove may identify which type of fluid is contained in the vessel.

The vessel may comprise a septum closing the opening. In use a hollow needle, preferably a pair of hollow needles may puncture the septum for extracting the fluid and venting the vessel.

The first groove and the second groove may extend to the end of the cylindrical wall that is proximal to the opening at the neck of the vessel for ensuring that the vessel can be smoothly introduced into a fluid extraction apparatus. The first and/or the second groove may extend at least 30%, preferably at least 50%, more preferred at least 70%, most preferred at least 85% of the height of the cylindrical wall.

The first groove and/or the second groove do not extend to the end of the cylindrical wall that is distal to the opening. The first groove and second groove extend less than 95% of the height of the cylindrical wall, preferably less than 80 % of the height of the cylindrical wall from the side proximal to the opening. A stop is formed at the end of the first and second groove. Since the first groove and second groove do not extend to the end distal to the opening the vessel cannot be inserted upside down in an extraction apparatus.

The vessel body, particularly the cylindrical wall and the base may be made of a chemically inert material, such as glass or ceramics. A lid is fixed to the neck of the vessel, wherein the neck is adjacent to the cylindrical wall. The lid may be screwed or glued to the neck. The lid may hold the septum. The lid may be made of glass, metal or plastic. The septum may be made of silicone.

An inventive set of vessels comprises a plurality of the above described vessels. The set comprises at least two different types of vessels. Each type of vessel is defined by a predetermined distance between the first and second groove. In one embodiment all vessels of the set are of a different type and comprise a different distance between the first groove and second groove. The distance may be an angular distance. In each vessel type a different type of fluid may be filled. The vessel extraction apparatus may detect the type of vessel and thereby also the fluid filled into the vessels based on the distance between the first groove and second groove. On each of the vessel of the set of vessel a colored portion may be arranged, wherein the colored portion of each vessel type comprises a different color. For example the cylinder base of each vessel type may comprise a different color. On each vessel a memory device, such as an RFID tag, may be arranged indicating serial number and the type of vessel.

A vessel extraction apparatus according to the present invention is adapted to extract fluid from a plurality of vessels. Such vessel extraction apparatus comprises a plurality of receiving openings, wherein each opening is adapted to receive one of the vessels described above. The vessels may be part of the set of vessels described above to each receiving opening. A first protrusion and a second protrusion are associated to each receiving opening. The first protrusion is adapted to engage with the first groove of the vessel. The second protrusion is adapted to engage with the second groove of the vessel, which is of a vessel type that is associated or corresponds to the respective receiving opening. The distance from the first protrusion to the second protrusion of a first receiving opening differs from the distance from the first protrusion to the second protrusion of a second receiving opening. The two grooves of the vessels and the protrusion associated to a receiving opening ensure that only a vessel of a certain type can be inserted in the receiving opening. Thereby, it can be ensured that only the correct type of vessel may be inserted into the receiving opening and consequently the correct type of fluid is contained in the vessel. The receiving opening may comprise a color that is also comprised by the corresponding vessel to be inserted into this receiving opening for enabling a user to insert the correct vessel in the receiving opening.

The term "to each receiving opening a first protrusion and a second protrusion are associated " has to be interpreted such that the first and second protrusion may be formed at any place in the vicinity of the receiving opening that ensures that only one type of vessel, i.e. the vessel type with the corresponding distance between the first groove and the second groove can be inserted into the receiving opening. The first and second protrusion may be formed at the opening, an element above the opening or an element below the opening, for example. All these embodiments are covered by the term "associated".

The distance from the first protrusion to the second protrusion of the first receiving opening differs from the distance from the first protrusion to the second protrusion of any other of the receiving openings of the vessel extraction apparatus. Such vessel extraction apparatus requires that in each receiving opening a different type of vessel is inserted.

To each receiving opening a receiving element may be associated. The first protrusion and the second protrusion associated to the receiving opening are located at the inner wall of the receiving element. In such embodiment the receiving opening may be formed by the receiving element or the receiving opening may be formed in an element located above the receiving element such as a lid, insert or plate located above the receiving element. In this embodiment, a vessel can only be inserted into the receiving element, if the distance of the first and second protrusion corresponds to the distance of the first and second groove of the vessel that is to be inserted into the receiving element.

The receiving element may be supported by a guide that allows a movement in the axial direction of a vessel positioned in the receiving element. In such embodiment the vessel is inserted in its axial direction into the receiving element and thereafter the receiving element is moved in the axial direction of the vessel by a force exerted by a user of the vessel.

The receiving element may be biased by an elastic element in the direction of the receiving opening, particularly in the axial direction of a vessel positioned in the receiving element. The force exerted by the elastic element counteracts a force applied by a user on a vessel in its axial direction thereof and ensures that the receiving element is held in its upper position if no vessel is placed into the receiving element.

The vessel extraction apparatus further comprises a latch that engages in a locked position in a locking opening of the receiving element. If the latch engages into the locking opening, the receiving element cannot be moved in the axial direction of a vessel to be inserted into the receiving element. A vessel positioned in the receiving element moves the latch into an unlocked position, in which the latch can disengage from the receiving element. In this embodiment the latch can extend in the locked position from outside the locking element into the receiving element, such as in the radial direction of the receiving element. The vessel positioned into the receiving element press the latch out of the inner portion of the receiving element, such that the latch merely extends from outside of the receiving element into the locking opening, but not from the locking opening over the inner wall into the inner portion of the receiving element. If the latch has an inclined surface or tapered surface, such as on its side directed to the receiving opening, a user can press the vessel and the receiving element in the axial direction of the vessel and the latch is moved out of the locking opening and receiving elements. This embodiment prevents misuse of the vessel extraction apparatus such that the receiving element can only be moved, if the correct type of vessel is inserted therein. Thereby, injury of a user may be prevented.

In one embodiment the locking opening is arranged between the first protrusion (groove) and second protrusion (groove). The locking opening may be arranged in a portion between the first and second protrusion that forms an angle of 180° or less between the first protrusion and second protrusion. More particularly in a radial sectional view the locking opening may be arranged in a portion between the first and second protrusion that forms an angle of 180° or less between the first protrusion and second protrusion. This embodiment avoids that a counterfeited vessel may be introduced into the receiving element. In one embodiment a plurality of locking openings may be arranged around the receiving element. The locking openings may be positioned at different angular positions with respect to the first protrusion and second protrusion for detecting counterfeited vessels. The locking openings may be positioned at opposite sides of the center of the receiving elements.

In one embodiment the vessel extraction apparatus further comprises a push-push locking mechanism that is adapted to hold in a fixed position the receiving element against the force of the elastic element. In one embodiment the fixed position corresponds to a lower position of the vessel and/or the receiving element. The push-push locking mechanism allows the receiving element in the movable position of the push-push locking mechanism to be moved in the axial direction of the vessel positioned in the receiving element. The push-push locking mechanism is activated by pushing the receiving element in the axial direction of the vessel positioned in the receiving element, particularly in the downward direction. The person skilled in the art knows several embodiments for a push-push mechanism and consequently the push-push mechanism does not have to be described in further detail herein for the sake of brevity. The push-push locking mechanism ensures that the vessel can be held in the fixed position corresponding to the lower position, in which the fluid is extracted from the vessel in the receiving element.

The push-push locking mechanism is arranged at the receiving element, particularly adjacent to the outer surface of the receiving element.

The vessel extraction apparatus further comprises a pair of hollow needles comprising a first and second hollow needle positioned under the receiving element, wherein the pair of a hollow needles punctures the septum of the vessel positioned in the receiving element, when the receiving element is held in the locked position of the push-push locking mechanism.

The vessel extraction apparatus may further comprise a fill level detection element that is adapted to detect the fill level of the liquid in the vessel. The fill level detection element may puncture the septum, when the vessel is held in the locked position of the push-locking mechanism. The fill level detection element may be an electrode detecting a current flow. The fill level detection element may be adapted to puncture the septum in the locked position of the push-lock mechanism. The fill level detection element may protrude in the locked position of the push-lock mechanism higher as at least one of the first and second hollow needle from the septum. The current for detecting the fluid level may flow between the fill level detection element and one of the hollow needles. In one embodiment, the fill level detection element may be arranged between the first hollow needle and second hollow needle. In one embodiment, the fill level detection element may be arranged at the upper portion of the first hollow needle and at the upper portion of the second hollow needle. In this embodiment the current flows between the two electrodes arranged on the hollow needles. In another embodiment, the fill level detection element comprises two electrodes that protrude in the locked position of the push-lock mechanism additionally to the two hollow needles through the septum. In this embodiment the current flows between the two electrodes and not through the hollow needles.

It is to be understood that the vessel extraction apparatus may comprise a plurality of receiving openings, wherein to each receiving opening a receiving element, a latch, a push-push locking mechanism, a pair of hollow needles and a fill level detection element may be associated.

The invention also discloses a beverage dispenser comprising the vessel extraction apparatus described before and a set of vessels described above.

The beverage dispenser may comprise a filtering device for filtering water, wherein the outlet of the filtering device is connected to the outlet of a plurality of micro metering pumps, wherein the inlet of each micro metering pump is connected to a hollow needle of the pairs of hollow needles. The filtering device may be a reverse osmosis filter that outputs demineralized water. The micro metering pumps may introduce user selected minerals into the demineralized water, wherein the minerals are supplied by fluids located in vessels inserted into the vessel extraction apparatus. The water mineralized by the micro metering pumps may be output by a nozzle to a beverage vessel of a user.

The invention also discloses a use of a vessel described above with a vessel extraction apparatus described above, comprising the step of introducing the vessel into an receiving opening of the vessel extraction apparatus such that the first groove and second groove of the vessel engage with the first protrusion and second protrusion of the vessel extraction apparatus. The vessel may be introduced into the vessel extraction apparatus such that the septum and at least a part of the first and second grooves enter the receiving opening of the vessel extraction apparatus.

### Brief description of the drawings

The invention is now described with respect to the accompanying drawings showing an exemplary and non limiting embodiment of the present invention, wherein:
Figure 1 shows a schematic overview of a water dispenser according to the present invention;
Figure 2 shows a vessel according to the present invention;
Figures 3 shows a side view of a vessel extraction apparatus according to the present invention.
Figure 4 shows a sectional view through a receiving element;
Figure 5a shows a latch and receiving element according to the present invention in its locked position;
Figure 5b shows a latch and receiving element according to the present invention in its unlocked position;
Figure 6 shows a partly cut away side view of the vessel extraction apparatus according to the present invention;
Figure 7 shows the receiving element and the push-push locking mechanism;
Figure 8 shows the vessel and the pair of hollow needles for extracting a fluid from the vessel;
Figure 9 shows the hollow needles and a fill level detection element in more detail

### Detailed description of the drawings

The vessel and the vessel extraction apparatus according to the present invention are described such that the vessel is introduced in the vessel extraction apparatus in a downward movement. It is be understood that the vessel can be moved in any direction such as horizontal, at any angle between horizontal and vertical, in the upward direction or the like into the vessel extraction apparatus. Consequently, the scope of protection of the appending claims covers all embodiments, independent of the angle in which the vessel is introduced into the vessel extraction apparatus. Drawings are not to scale and merely exemplary for understanding the principals of the present invention.

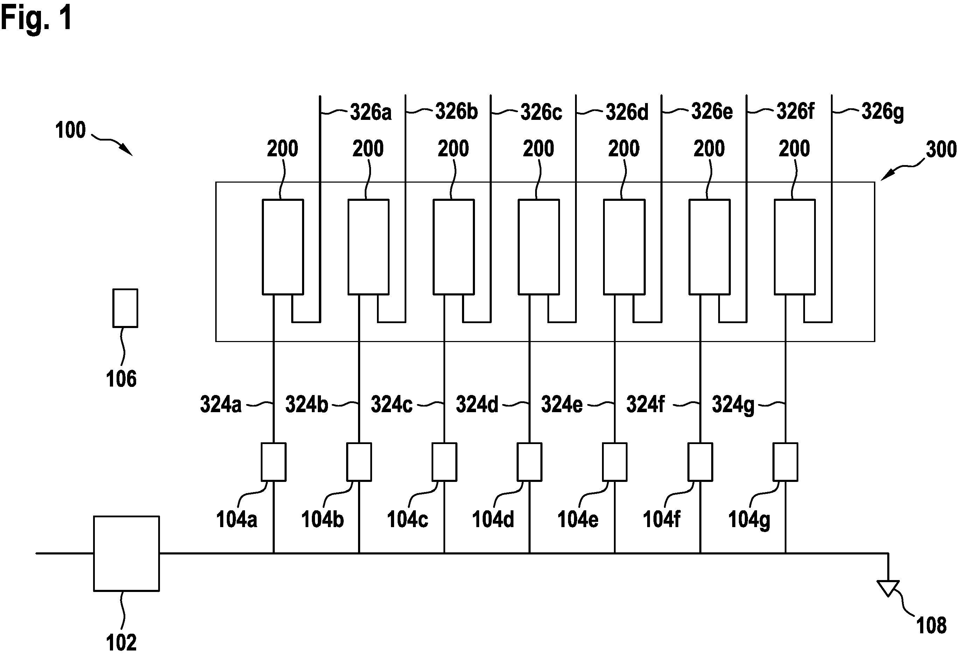

Figure 1 shows a schematic of a water dispenser 100 using a fluid vessel extractor 300 according to the present invention. Tap water is filtered by a filtering device 102, such as a reverse osmosis filter. A plurality of metering pumps 104a-104g meter mineralization fluid and/or flavoring fluid into the water demineralized by the filter 102. The water is dispensed by a nozzle 108 into a user vessel. A controller 106 controls the metering pumps 104a-104g for delivering an appropriate amount of mineralization fluid and/or flavoring fluid into the demineralized water.

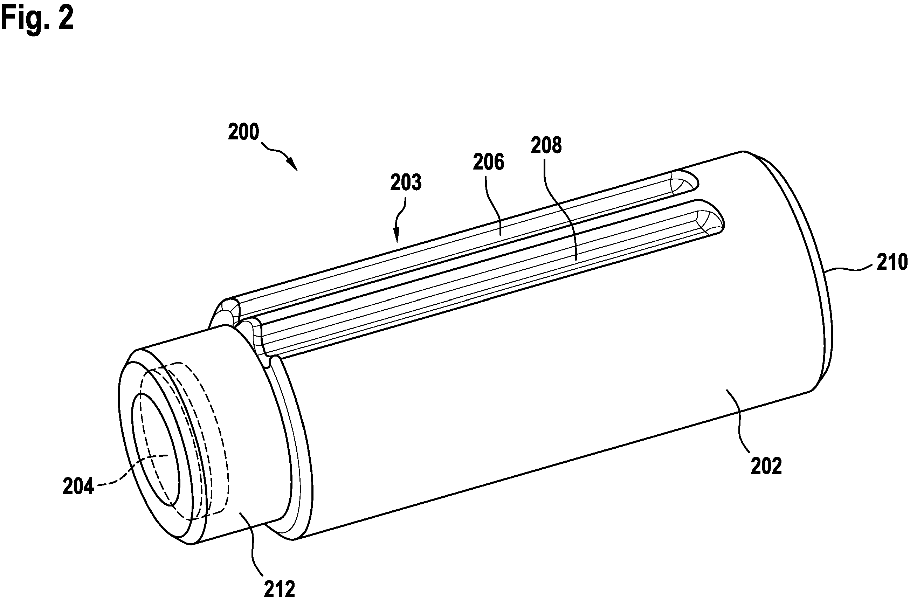

Reference is made to figure 2, showing the vessel 200 according to the present invention. The vessel comprises a vessel base 210, an essentially cylindrical vessel body 203 having a cylindrical wall 202, a septum 204 and a lid 212 closing the opening of the generally cylindrical vessel 200 by the septum 204 at the neck of the vessel 200. The cylindrical wall 202 and the base of the vessel 200 can be made of glass, ceramics or any chemically inert material. Thereby, high hygienic standards can be achieved.

The lid 212 can be made of glass or metal and can be glued or screwed to the essentially cylindrical vessel body 203. The septum 204 can be made of silicon.

According to the present invention the vessel 200 comprises a first groove 206 formed in the cylindrical wall 202. The first groove 206 is configured as an orientation groove defining the orientation of the vessel 200 with respect to a guide of a fluid extraction apparatus.

The vessel 200 further comprises a second groove 208 formed in the cylindrical wall 202. The second groove is configured as a coding groove identifying the type of vessel. A set of vessels comprises several types of vessels 200, wherein in each type of vessel a different fluid, such as a mineralization fluid, flavoring fluid can be filled. The distance between the first groove 206 and the second groove 208 determines the type of vessel.

The mineralization fluid is drawn from the plurality of vessels 200 located in the fluid extraction apparatus 300 according to the present invention. Each vessel 200 comprises a different type of mineralization fluid and/or flavoring fluid and/or supplementation fluid. Each micro metering pump 104a-104g is connected to a first hollow needle 324a-324g, which are each connected to one vessel 200 to draw a fluid therefrom. Each vessel 200 is also connected to a second hollow needle 326a-326g for venting the vessel in order to avoid negative pressure or a vacuum in the vessel.

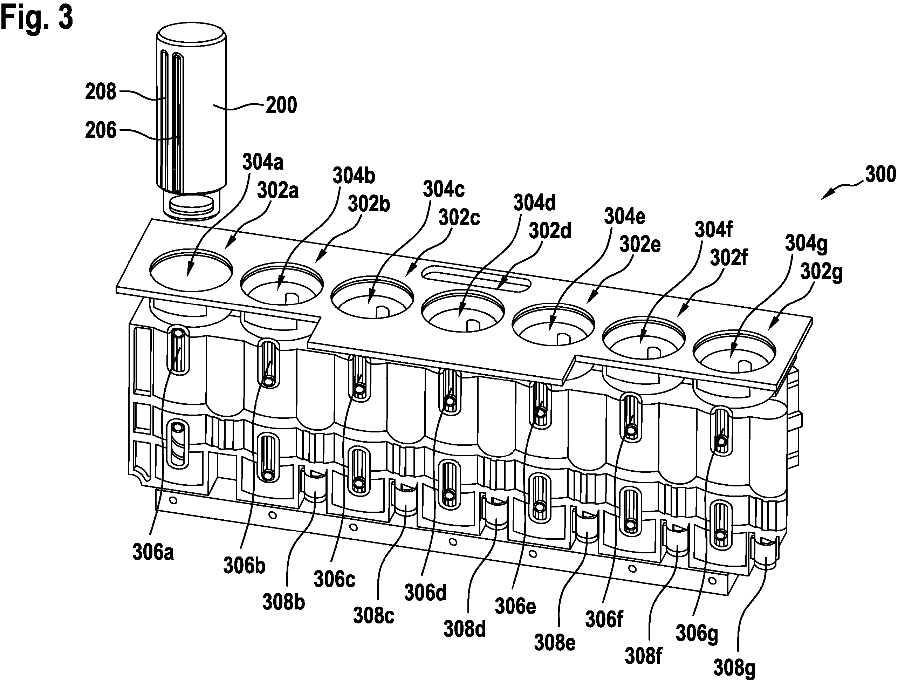

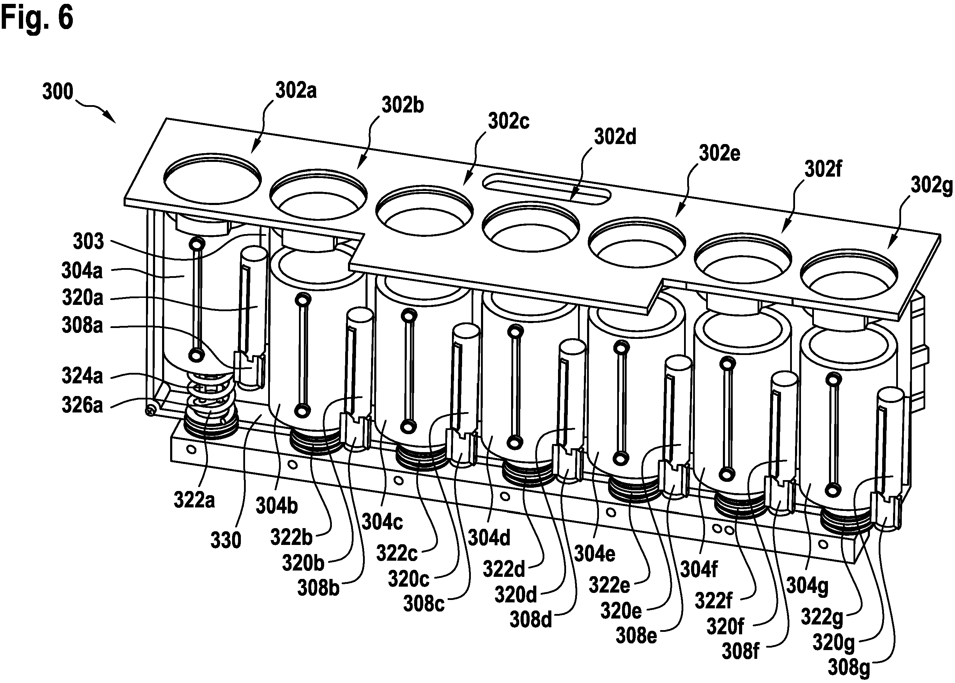

Reference is made to figures 3 to 8 showing an embodiment of the vessel extraction apparatus 300 according to the present invention.

The vessel extraction apparatus 300 comprises seven receiving openings 302a-302g, wherein in each receiving opening a particular type of vessel 200 can be inserted. Underneath each receiving opening 302a-302g a receiving element 304a-304g is arranged. The receiving element 304a-304g is movable in the axial direction of a vessel 200 inserted into the receiving element 304a-304g by a guide 306a-306g.

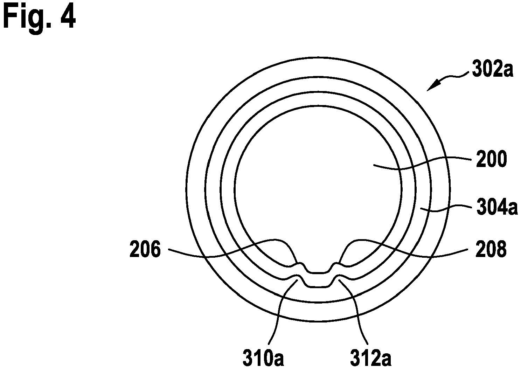

As is shown in figure 4, a receiving element 304a comprises a first protrusion 310a and a second protrusion 312a formed on the inner wall of the receiving element 304a and protruding in the radial direction of the receiving element 304a. The first protrusion 310a engages in the first groove 206 of the vessel 200 and the second protrusion 312a engages into the second groove 208 of the vessel 200. The first groove 206 acts as an orientation groove and the second groove 208 acts as a coding groove. The distance between the first groove 206 and the second groove 208 determines the type of vessel and consequently, which fluid is filled into the vessel. This ensures that only one type of vessel can be inserted in one type of receiving element 304a. In other words, only the type of vessel 200 can be inserted in the corresponding type of receiving element 304a. The distance between the first groove 206 and the second groove 208 of a vessel corresponds to the distance between the first protrusion 310a and the second protrusion 312a of the corresponding receiving element 304a.

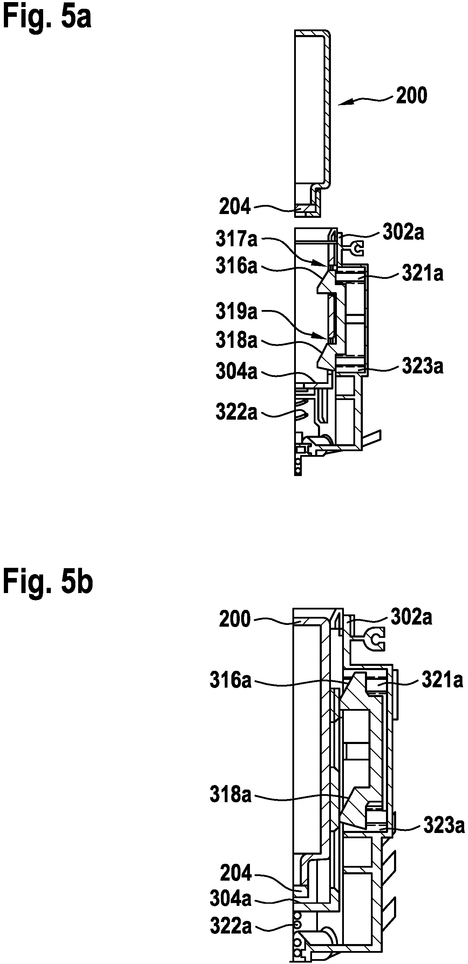

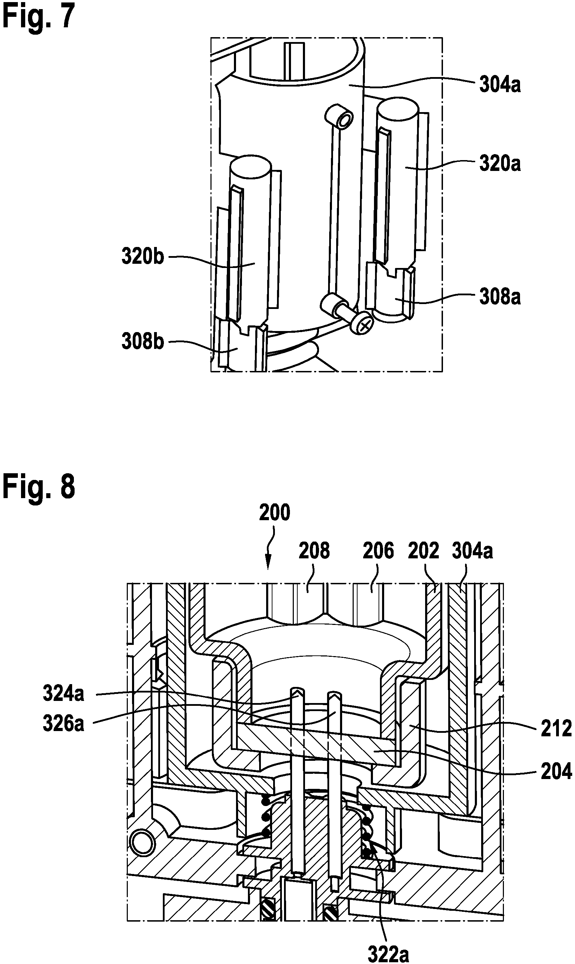

As is shown in figure 5a, a latch 316a, 318a may protrude through a locking opening 317a, 319a into the receiving element 304a. The latches 316a, 318a prevent the receiving element 304a to be moved in a downward direction towards the hollow needles 324a, 326a. Thereby, injury of a user can be avoided. If a vessel 200 is inserted into the receiving element 304a (see figure 5b) the latch 316a, 318a is moved in radial direction away from the inner of the receiving element 304a such that the latch 316a, 318a is located in the locking opening 317a, 319a. If the user presses the vessel in the direction of the hollow needles 324a, 326a (see figure 8) the latch is moved in radially direction away from the outer wall of the receiving element 304a. This can be achieved, if the latch 316a, 318a has an inclined or tapered surface.

Figure 8 shows the vessel 200 in its fixed position, in which a locking mechanism and 308a, 320a (see figure 7) holds the vessel 200 in its fixed position in which the hollow needles 324a, 326a puncture and penetrate the septum 204 held by the lid 212 at the neck of the vessel 200. In the fixed position, fluid can be drawn by the hollow needle 324a to a micro metering pump and air can be vented into the vessel 200 by the hollow needle 326a in order to avoid a negative pressure or vacuum in the vessel 200.

Figures 7 and 8 show a spring 322a pushing the receiving element 304a to the receiving opening 302a in a movable position. If the vessel 200 is inserted into the receiving element 304a and the receiving element is pushed downwards, the second push-push element 322a touches the housing 330 and causes that the first push-push element 308a is rotated about a predetermined angle. After the first push-push locking element 308a has been rotated a predetermined angle, the second push-push element 308a engages with a part of the housing 340a and holds the locking element in the fixed position shown in figure 8. If the vessel 200 in the receiving element 304a is pressed towards the spring 322a, the second push-push element 320a contacts the housing 303 and causes the first push-push locking element 308a to be rotated. This rotation disengages the first push-push locking element 308a from the housing and the receiving element 304a is pushed by the spring 322a in its movable position towards the receiving openings 302a.

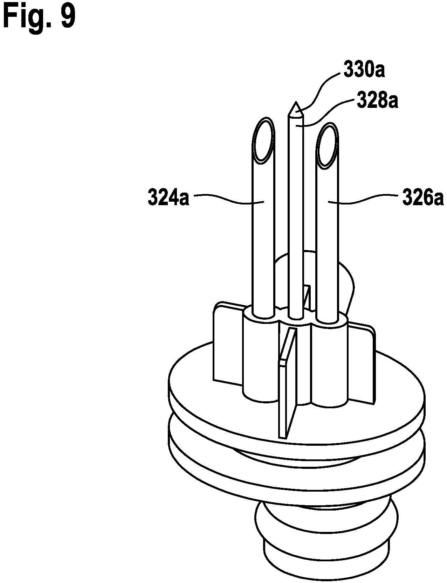

Reference is made to figure 9 showing details of the hollow needles 324a, 326a and a fill level detection element 328a in more detail. The fill level detection element 328a protrudes over a longer distance from the base as compared to the hollow needles 324a, 326a.The upper portion of the fill level detection element 326a may comprise a fill level electrode 330a, wherein current can flow between the fill level electrode 330a and one of the hollow needles 324a, 326a. As soon as the current cannot flow between the fill level electrode 330a and one of the hollow needles 324a, 326a the vessel 200 is depleted and a controller of the vessel extraction device 100 informs a user to change the vessel 200. The controller of the vessel extraction device 100 can also store on a memory device, such as an RFID tag, attached to the vessel that the vessel is empty.

The hollow needles 324a, 326a are made of metal or any other chemically inertial material. Also the vessel 200 and the septum 204 are made of a chemical inertial material. Thereby, high hygienic standards can be fulfilled.

The push-push locking mechanism 308a, 320a holds the vessel securely in its fixed position, in which the hollow needles 324a, 326a penetrate the septum 204. Further, the latches 316a, 318a prevent injury of a user by the needles 324a, 326a by abusing the vessel extraction apparatus 300.

The distance between the first groove 206 and the second groove 208 defines the type of vessel 200 and which type of fluid is filled into the vessel 200. A plurality of protrusions 310a, 312a are associated to each receiving opening 302a-302g. The protrusions 310a, 312a, particularly the distance between the protrusions define(s), which type of vessels 200 can be introduced into the receiving opening 302a-302g. Since a distinct pair of needles 324a, 326a is associated to the protrusions 310a, 312a and the receiving opening 302a-302g, the pair of protrusions and grooves can define, which type of vessel and type of fluid in the vessel 200 can be extracted by the respective pair of needles 324a, 326a.

## Claims

1. A vessel, comprising:
- an essentially cylindrical vessel body having an opening, a cylindrical wall and a cylinder base;
- a first groove formed in the cylindrical wall and extending in axial direction at least a predetermined portion of the vessel body; and
- a second groove formed in the cylindrical wall and extending in axial direction at least a predetermined portion of the vessel body;
- wherein the first groove is an orientation groove defining the orientation of the vessel with respect to a guide of a fluid extraction apparatus; and
- wherein the second groove is a coding groove identifying the type of vessel.

2. The vessel according to claim 1, further comprising a septum closing the opening.

3. The vessel according to claim 1 or 2, wherein:
- the first groove and/or the second groove extend to the end of the cylindrical wall that is proximal to the opening of the vessel;
- the first groove and/or second groove extend at least 30 % of the height of the cylindrical wall;
- the first groove and/or second groove extend at least 50 % of the height of the cylindrical wall;
- the first groove and/or second groove extend at least 70 % of the height of the cylindrical wall;
- the first groove and/or second groove extend at least 85 % of the height of the cylindrical wall;
- the first groove and/or the second groove to not to the end of the cylindrical wall that is distal to the opening;
- the first groove and/or second groove less than 95 % of the height of the cylindrical wall;
- the first groove and second groove extend less than 80 % of the height of the cylindrical wall.

4. A set of vessels comprising a plurality of vessels according to any one of claims 1 to 3, wherein the set comprises at least two types of vessels, wherein each type of vessel is defined by a predetermined distance between the first groove and second groove.

5. A vessel extraction apparatus, adapted to extract fluid form a plurality of vessels, comprising:
- a plurality of receiving openings, wherein each opening is adapted to receive one of the vessels according to any one of claims 1 to 3;
- wherein a first protrusion and a second protrusion are associated to each receiving opening;
- wherein the first protrusion is adapted to engage with a first groove of the vessel;
- wherein the second protrusion is adapted to engage with a second groove of the vessel that is of a vessel type corresponding to the respective receiving opening;
- wherein the distance from the first protrusion to the second protrusion of a first receiving opening differs from the distance from the first protrusion to the second protrusion of a second receiving opening.

6. The vessel extraction apparatus according to claim 5, wherein the distance from the first protrusion to the second protrusion of the first receiving opening differs from the distance from the first protrusion to the second protrusion of a any other of the receiving openings.

7. The vessel extraction apparatus according to claim 5 or 6, wherein to each receiving opening a receiving element is associated, wherein the first protrusion and the second protrusion associated to the receiving opening are located at the inner wall of the receiving element.

8. The vessel extraction apparatus according to claim 7, wherein the receiving element is supported by a guide that allows a movement in the axial direction of a vessel positioned in the receiving element.

9. The vessel extraction apparatus according to claim 8, wherein the receiving element is biased by an elastic element in the direction of the receiving opening.

10. The vessel extraction apparatus according to claim 8 or 9, further comprising a latch that engages in its locked position in a locking opening of the receiving element, wherein a vessel positioned in the receiving element moves the latch into its unlocked position, in which the latch can disengage from the receiving element.

11. The vessel extraction apparatus according to claim 10, wherein the locking opening is arranged between the first protrusion and second protrusion.

12. The vessel extraction apparatus according to any one of claims 8 to 11, further comprising a push-push locking mechanism that is adapted to hold in a fixed position the receiving element against the force of the elastic element, wherein the push-push locking mechanism allows the receiving element in the a movable position of the push-push locking mechanism to be moved in the axial direction of the vessel positioned in the receiving element and wherein the push-push locking mechanism is actuated by pushing the receiving element in axial direction of the vessel positioned in the receiving element.

13. The vessel extraction apparatus according to claim 12, wherein the push-push locking mechanism is arranged at the receiving element.

14. The vessel extraction apparatus according to any one of claims 5 to 13, further comprising a pair of needles positioned under the receiving element, wherein the pair of hollow needles comprises a first hollow needle and a second hollow needle and punctures the septum of a vessel positioned in the receiving element, when the receiving element is held in the locked position of the push-push locking mechanism.

15. The vessel extraction apparatus according to any one of claims 5 to 14, further comprising at least one of the following:
- a fill level detection element that is adapted to detect the fill level of the liquid in the vessel;
- a fill level detection element that is adapted to puncture the septum in the locked position of the push-lock mechanism;
- a fill level detection element that protrudes in the locked position of the push-lock mechanism higher as at least one of the first and second hollow needle from the septum;
- a fill level detection element arranged between the first hollow needle and second hollow needle;
- a fill level detection element arranged at the upper portion of the first hollow needle;
- a fill level detection element arranged at the upper portion of the second hollow needle.

16. A beverage dispenser, comprising
- a vessel extraction apparatus according to any one of claims 5 to 14; and
- a set of vessels according to claim 4.

17. The beverage dispenser according to claim 15, further comprising a filtering device for filtering water, wherein the outlet of the filtering device is connected to the outlet of a plurality of micro metering pumps, wherein the inlet of each micro metering pump is connected to a hollow needle of the pairs of needles.

18. Use of a vessel according to any one of claims 1 to 4 with a vessel extraction apparatus according to any one of claims 5 to 13, comprising the step of
- introducing the vessel into an receiving opening of the vessel extraction apparatus such that the first groove and second groove of the vessel engage with the first protrusion and second protrusion of the vessel extraction apparatus.
